# DEMANDE DE BREVET EUROPEEN

(11) **EP 0 600 784 A1**
(43) Date de publication de la demande: **08.06.1994**
(21) Numéro de dépôt: 93402889.5
(22) Date de dépôt: 30.11.1993
(51) Int. Cl.: A01J 9/04, A01J 25/06

(54) **Refroidisseur de lait en vrac équipé d'un mécanisme et d'un outillage embarqué pour la fabrication fromagère**

(30) Priorité: 03.12.1992 FR 9214550
(71) Demandeur: PROMINOX S.A., F-58000 Nevers (FR)
(72) Inventeur: Genty, Gérard, F-78680 Epône (FR)
(74) Mandataire: Cournarie, Michèle

(57) **Abrégé**

Refroidisseur de lait en vrac comportant un mécanisme motorisé qui comprend :
- une poutre support (F),
- un moteur (G) entraînant
- un bras porte-outil périphérique (E),
- une couronne fixe (A) solidaire de la poutre support (F) et dont l'axe se confond avec l'axe de rotation du bras (E),
- un pignon fou (B) qui s'engrène sur la couronne (A),
- un pignon (C) qui s'engrène sur le pignon fou (B) et entraîne
- un bras porte-outil satellite (D) à contre-sens de (E).

## Description

La présente invention concerne un refroidisseur de lait en vrac aménagé pour la fabrication fromagère, notamment pour le caillage, le décaillage, le brassage et le soutirage d'un caillé destine à la production d'un fromage, par exemple de type à pâte pressée, cuite ou non cuite.

Il est connu d'utiliser, pour le stockage du lait, une cuve équipée d'un dispositif d'agitation et d'un système de refroidissement, tel qu'un groupe frigorifique permettant d'abaisser la température du lait, après la traite, à environ 4°C, et de l'y maintenir. Une telle cuve est appelée "refroidisseur de lait en vrac" Moyennant l'aménagement du dispositif d'agitation, le brevet FR-A-2 665 824 enseigne qu'une telle cuve peut être parfaitement adaptée à la conservation de plusieurs collectes de lait successives.

Pour la fabrication du fromage, notamment de type à pâte pressée, cuite ou non cuite, on emploie actuellement une cuve différente du refroidisseur de lait en vrac. Cela suppose par conséquent que l'on transvase le lait, ce qui multiplie les risques de le souiller. Par contre, le stockage et la conservation du lait, puis la fabrication fromagère, peuvent maintenant être réalisés dans une cuve unique conforme à la présente invention. Une telle cuve comporte un couvercle basculant qui, une fois la technologie de fabrication bien établie, est fixé sur le compas articulé de la cuve. La cuve de fabrication fromagère devient alors une cuve fermée avec nettoyage en place (N.E.P.), sur le couvercle de laquelle on peut ménager des tampons d'inspection. Un progrès important est ainsi réalisé dans l'hygiène des procédés de fabrication fromagère.

A cet effet, la présente invention a pour objet un refroidisseur de lait en vrac, caractérisé en ce qu'il comporte un mécanisme motorisé comprenant :
- une poutre support,
- un moteur entraînant
- un bras porte-outil périphérique ,
- une couronne fixe solidaire de la poutre support et dont l'axe se confond avec l'axe de rotation du bras porte-outil périphérique,
- un pignon fou qui s'engrène sur la couronne fixe,
- un pignon qui s'engrène sur le pignon fou et entraîne
- un bras porte-outil satellite à contre-sens du bras porte-outil périphérique,

l'ensemble constitué du pignon fou et du pignon de l'outil satellite étant aisément interchangeable par simple démontage d'un carter de protection. A cet égard, on peut mettre en oeuvre un jeu de pignons interchangeables de différents diamètres, avec indexage variable sur le bras périphérique.

La poutre support peut être montée solidairement à un couvercle basculant, sur le compas articulé en bord de cuve, ce qui permet le basculement du couvercle, en vue notamment d'un nettoyage manuel ou d'une inspection mécanique de la cuve.

Les bras porte-outils périphérique et satellite sont notamment en tôle pliée, sans corps creux, afin de répondre aux normes d'hygiène. Ils sont prolongés par des outils de tranchage et de brassage consistant notamment, respectivement, en tranche-caillés à fils ou couteaux, et en brassoir-pelles classiques.

Un motoréducteur à variateur de vitesse est mis en oeuvre pour entraîner le mécanisme de cinématique des outils. Enfin, le présent refroidisseur est habituellement, mais non nécessairement, de forme substantiellement cylindrique. D'autre part, de manière également courante, le lait à partir duquel le fromage est fabriqué consiste en lait cru ou en lait pasteurisé.

Selon une variante avantageuse, le refroidisseur de lait en vrac selon l'invention comporte un couvercle basculant et des outils de tranchage et de brassage suspendus, la surface d'échange du fond de cuve et/ou en paroi verticale de cuve, appelée virole, associée au groupe frigorifique permettant
- de refroidir le lait de collecte pour un travail sur deux traites en lait de report, puis
- de réchauffer le lait pour remise à température d'emprésurage par fonctionnement en pompe à chaleur.

De préférence, la longueur du bras porte-outil satellite est comprise entre 30 et 37% du diamètre interne de la cuve.

D'autre part, l'alimentation de nettoyage du présent refroidisseur de lait en vrac est effectuée de préférence par l'arbre creux central d'entraînement du bras porte-outil périphérique.

Il est, de plus, particulièrement favorable, que le refroidisseur de lait en vrac selon l'invention comporte un robinet de vidange par lequel on soutire le caillé vers le bac de pressage, ce robinet de vidange étant en affleurement du bas de la virole. Cette caractéristique permet d'éviter toute obstruction du caillé au soutirage.

Des exemples de mise en oeuvre de l'invention vont maintenant être décrits en regard des figures annexées, dans lesquelles :
- la figure 1 est un schéma de principe des éléments suspendus de tranchage et de brassage, vu en coupe; et
- la figure 2 est un schéma de principe des mêmes éléments qu'à la figure 1, mais en vue de dessus.

Un couvercle basculant non représenté, d'une cuve sensiblement cylindrique, est solidaire d'une poutre support F radiale susceptible d'être montée, notamment, sur un compas articulé en bord de cuve.

La poutre F supporte un arbre H suivant l'axe de la cuve cylindrique, cet arbre H entraînant en rotation un bras porte-outil périphérique E au moyen d'un moteur G.

Un pignon fou B, dont l'axe de rotation est fixe par rapport au bras E, s'engrène sur une couronne fixe A solidaire de la poutre F, l'axe de A se confondant avec l'axe de rotation du bras E.

A son tour, un pignon C dont l'axe de rotation est également fixe par rapport au bras E s'engrène sur le pignon fou B, entraînant un bras porte-outil satellite D à contre-sens de E.

Le refroidisseur de lait en vrac muni de ce dispositif est avantageux à de multiples égards.

Il permet de fabriquer du fromage.

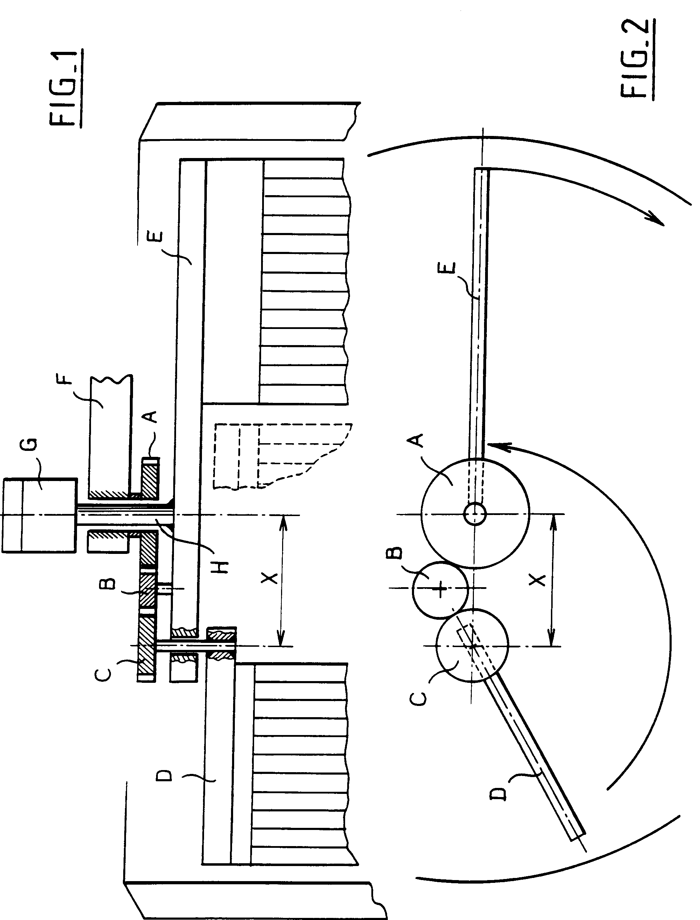

De plus, l'interchangeabilité, à x constant (voir figure 1 et figure 2), de l'ensemble constitué du pignon fou B et du pignon C permet de faire varier le rapport de la vitesse angulaire du bras satellite D à celle du bras périphérique E.

Or, un tranchage plus fin est obtenu si l'on monte un outil de tranchage sur le bras satellite D et un outil de brassage sur le bras périphérique E, par rapport au montage inverse, pour un même temps de fonctionnement. Etant donné, d'autre part, que le tranchage est d'autant plus fin que la vitesse angulaire de l'outil de tranchage est élevée, le dispositif selon l'invention permet d'atteindre aisément l'effet dynamique recherché, par le choix de B et C, ou par l'inversion du montage de l'outil de tranchage et de l'outil de brassage.

Enfin, il est souhaitable de mettre en oeuvre, pour la réalisation du refroidisseur selon la présente invention, des matériaux silencieux, nettoyables et alimentaires, de façon habituelle avec ce type de dispositif.

## Revendications

**1.-** Refroidisseur de lait en vrac caractérisé en ce qu'il comporte un mécanisme motorisé comprenant :
- une poutre support (F),
- un moteur (G) entraînant
- un bras porte-outil périphérique (E),
- une couronne fixe (A) solidaire de la poutre support (F) et dont l'axe se confond avec l'axe de rotation du bras (E),
- un pignon fou (B) qui s'engrène sur la couronne (A),
- un pignon (C) qui s'engrène sur le pignon fou (B) et entraîne
- un bras porte-outil satellite (D) à contre-sens de (E),
l'ensemble constitué du pignon fou (B) et du pignon (C) étant aisément interchangeable, par simple démontage d'un carter de protection.

**2.-** Refroidisseur de lait en vrac selon la revendication 1, caractérisé en ce qu'il comporte un couvercle basculant et des outils de tranchage et de brassage suspendus, la surface d'échange du fond de cuve et/ou en virole associée au groupe frigorifique permettant
- de refroidir le lait de collecte pour un travail sur deux traites en lait de report, puis
- de réchauffer le lait pour remise à température d'emprésurage par fonctionnement en pompe à chaleur.

**3.-** Refroidisseur de lait en vrac selon la revendication 1 ou 2, caractérisé en ce que la longueur du bras (D) est comprise entre 30 et 37% du diamètre interne de la cuve.

**4.-** Refroidisseur de lait en vrac selon l'une quelconque des revendications 1 à 3, caractérisé en ce que son alimentation de nettoyage est effectuée par l'arbre creux central (H) d'entraînement du bras porte-outil périphérique (E).

**5.-** Refroidisseur de lait en vrac selon l'une quelconque des revendications 1 à 4, caractérisé en ce qu'il comporte un robinet de vidange par lequel on soutire le caillé vers le bac de pressage, ce robinet de vidange étant en affleurement du bas de la virole.
